# EUROPEAN PATENT APPLICATION

(11) **EP 0 716 869 A2**
(43) Date of publication of application: **19.06.1996**
(21) Application number: 95307682.5
(22) Date of filing: 27.10.1995
(51) Int. Cl.: B01D 19/00, G01N 15/02, G01N 15/04

(54) **Gas-liquid separator and particle monitor provided with the gasliquid separator**

(30) Priority: 27.10.1994 JP 287375/94
(71) Applicant: Mikuni Kikai Ltd., Yodogawa-ku, Osaka (JP)
(72) Inventor: Kin, Jitsu, Yodogawa-ku, Osaka (JP); Koshizuka, Hiroshi, Yodogawa-ku, Osaka (JP); Hokke, Yoshihisa, Yodogawa-ku, Osaka (JP); Sakamoto, Akira, Yodogawa-ku, Osaka (JP)
(74) Representative: Skone James, Robert Edmund

(57) **Abstract**

Gas-liquid separator comprisine a helicoidal tube (1) having an inlet (5) for liquid containing fine bubbles, means for feeding the liquid to the inlet (5), a degassing chamber (2) communicated with an outlet (6) of of the tube, means (3) for removing separated gas out of the degassing chamber (2), and means for removing degassed liquid out of the degassing chamber (2), the helicoidal tube (1) having such a length that the fine bubbles in the liquid are coalesced and the resulting coalescent bubbles are separated from the liquid in the degassing chamber (2).

## Description

The present invention relates to a gas-liquid separator for separating fine gas bubbles out of liquid and a particle monitor provided with the gas-liquid separator.

Applicant disclosed a novel method and apparatus for monitoring or detecting fine particles in fluid stream in Japanese patent application No. 4-56418 (JP-A-5-215664). This apparatus is spreading widely among a variety uses including detection of impurity sub-micron particles in pure water and ultrapure water used in electronics industry, early detection of bacterium contamination and quality control of foods or pharmaceutical products.

In actual uses, we found that the apparatus miscounts fine gas bubbles in liquid because it is difficult to distinguished them from each other.

Usual gas-liquid separation methods are based on gravity separation, filtering, membrane separation and compression-depression. Gravity separation, however, require long separation time and a large tank, a filter catches fine particles to be count, membrane separation require complicated system and consume energy, compression-depression also require sophisticated apparatus and can not be operated continuously.

JP-A-6-134211 discloses a method for separating air bubbles by utilizing surface wettability or surface tension. In this patent, pure water is flown through a series of six reverse U-shaped tubes of polytetrafluoroethylene having an inner diameter of 15.9 mm (height of each tube is 600 mm) at a flow rate of 50.5 cm/min, so that bubbles adhere to inner surface of the tubes and coalescence into larger bubbles. Grown bubbles which gain higher floating velocity can be collected at the top of U-shaped tubes This degassing unit is arranged at an inlet of a light scattering type particle counter Demerit of this gas separator reside in that material of tube is limited because separation depend on wettability of surface although this separator is much effective comparing to known separation systems.

An object of the present invention is to provide a simple gas-liquid separator for separating fine gas bubbles out of liquid.

Another object of the present invention is to improve performance of a particle monitor which was developed by the applicant by combining the gas-liquid separator with the monitor.

The present invention provides a gas-liquid separator comprising a helicoidal tube having an inlet for liquid containing fine bubbles, means for feeding the liquid to the inlet, a degassing chamber (air trap) communicated with an outlet of of the tube, means for removing separated gas out of the degassing chamber, and means for removing degassed liquid out of the degassing chamber, the helicoidal tube having such a length that the fine bubbles in the liquid are coalesced and the resulting coalescent bubbles are separated from the liquid in the degassing chamber.

The present invention provides also a monitor for detccting sub-micron particles in liquid, characterized in that the gas-liquid separator is arranged at an entrance of the monitor disclosed in applicant's Japanese patent application No. 4-56418 (JP-A-5-215664).

It is preferable to arrange the central axis of helicoid of the helicoidal tube vertically, in other words, helicoidal tube segments are arranged horizontally (hereinafter, horizontal arrangement) because it is confirmed that the separation efficiency, of horizontal arrangement is higher than that of vertical arrangement in which the central axis of helicoid horizontally.

In order to save space, the helicoidal tube advantageously surrounds the degassing chamber. The helicoidal tube enters preferably at the top of the degassing chamber and liquid is preferably drained from the bottom of the chamber.

The length of the helicoidal tube depend on nature and flow rate of liquid to be treated and to inner diameter of the tube. In usual applications such as water or aqueous solution to which the present invention is advantageously applicable, the inner diameter of the tube is in a range of about 1.5 mm to about 6 mm and the flow rate is in a range of 0.3 to 57 m/min.

It is though that the efficiency of separation or coalescence increase with increase of the length of the tube. However, inventors found such a fact that no merit in the separation efficiency is obtained even if longer tube is used. The length of tube depend on nature of liquid, inner diameter of tube and the separation efficiency. For example, in Example 3, about 2 meter of length is required.

The separation efficiency increase with increase of the volume of the degassing chamber. However, it is preferable to reduce the volume of the degassing chamber as small as possible so as to realize real time detection or monitoring. In the present invention, several seconds of residence time in the degassing chamber is satisfactory if the helicoidal tube has a length enough to coalesce fine bubbles.

Now, attached drawings are referred.

Fig. 1 is an illustrative perspective view of a gas-liquid separator according to the present invention.

Fig. 2 is an illustration showing the gas-liquid separator arranged before the sub-micron particles monitor described in JP-A-5-215664 according to the present invention.

Fig. 3 illustrates a test system for evaluating performance of the gas-liquid separator accurding to the present invention.

Fig. 4 is a graph showing the results of Example 2.

Fig. 5 is a graph showing the results of Example 3.

Fig. 6 illustrates another test system for evaluating performance of the gas-liquid separator according to the present invention.

Fig. 7 is a graph showing the test results when applicant's submicron particle monitor was used.

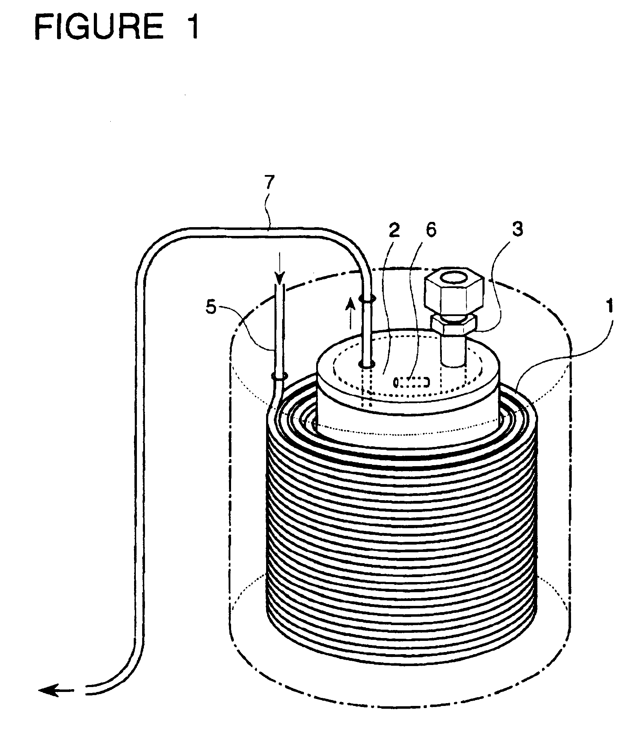

Fig. 1 is an illustrative perspective view of a gas-liquid separator according to the present invention.

Liquid containing fine gas bubbles, such as pure water is fed to an inlet (5) of at least one helicoidal tube (1). The helicoidal tube (1) is arranged such a manner that the central axis of helicoid extends vertically and preferably surrounds a degassing chamber (2), an outlet (6) of the helicoidal tube (1) preferably, opens at an upper part of the degassing chamber (2). In Fig. 1, the helicoidal tube (1) is shown in multi-layered windings form or turns but is not necessarily to do so. In actual apparatus, several windings are satisfactory. Number of turns depends on a diameter of the degassing chamber (2).

The degassing chamber (2) has an outlet (3) of separated gas at the top. It is necessary to connect a relief valve to the outlet (3) if the liquid is under pressurized condition. Or, the outlet (3) may connect to a suction pump if the liquid is not pressurized. A filter is advantageously attached to the outlet (3) so as to prevent contamination of liquid. Liquid free from gas is withdrawn through a tube (7) out of the degassing chamber (2). The liquid is preferably withdrawn near the bottom of the degassing chamber (2).

In the gas-liquid separation according to the present invention, fine gas bubbles coagulate or coalesce each other during the liquid is conveyed though the tube and the resulting coagulated or coalesced bubbles or larger bubbles gain bigger floating velocity, so that gas is separated from liquid in the degassing chamber (2) in a reduced time duration. Therefore, the helicoidal tube (1) must have a length that is necessary to assure the coalesce or separation.

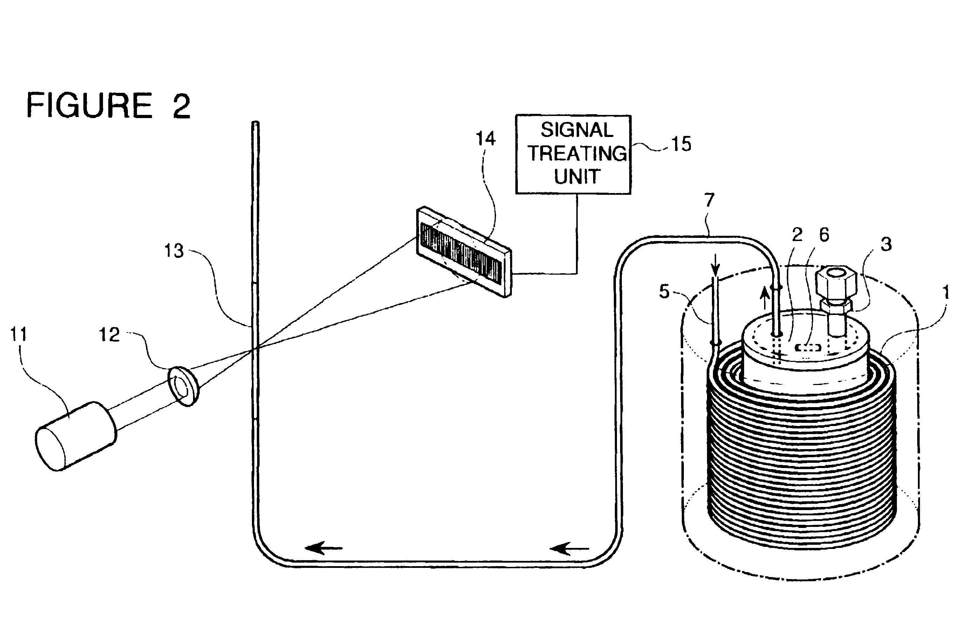

A monitor for detecting sub-micron particles in liquid with which the gas-liquid separator is advantageously combined is described in applicant's Japanese patent application No. 4-56418 (JP-A-5-215664). The contents of this patent application forms a part of this specification as reference. The principle of the monitor is briefly explained by Fig. 2.

Fig. 2 is an illustration of a combination of the gas-liquid separator arranged in front of the sub-micron particles monitor described in JP-A-5-215664.

The sub-micron particles monitor comprises a coherent light source (11) such as a laser, an optical system (12) for converging a light beam emitted from the coherent light source to produce a converged light, a cell (13) through which a stream of fluid containing fine particles is flown and being located in the neighborhood of a focus of the converged light beam, a photo-detector (14) such as photo-diode alley which is positioned at an opposite side of the coherent light source with respect to the stream and substantially on an optical axis of the light beam to produce electrical signals, and an electric circuit (15) for counting numbers of particles in the stream by treating the electrical signals.

The coherent light source (11) may consist of a laser and a collimator lens system. The laser can be any laser but is preferably a laser diode or semiconductor laser of small power. In other words, a cheap laser diode can be used advantageously in the method according to the present invention. Sensitivity increases with decrement of the wave length of laser oscillation. Inventors confirmed that the detection principle of the present invention can be applicable for a laser diode whose power is smaller than 1 mW, for example 0.2 mW.

The focal distance of the optical system or lens (12) for converging a light beam is selected in a function of the particle size to be detected. For example, a lens having the focal distance f = 10 mm may be used to detecting a fine particle whose particle size is 0.2 µm. The cell (13) must be transparent at least on light-receiving face and light exiting face but can be a simple structure because no consideration is required to stray light. In the embodiment shown in Fig. 2, a transparent tube coming from the gas-liquid separator is used as the optical cell (13)

Not so high sensitivity is required in the photo-detector (14) if the 5 the photo-detector (14) can detect the diffraction image hidden in the transmitted light. In this sense, photo-diode can be used. The photo-detector (14) can comprise a single photo-diode but preferably constitutes of a photo-diode alley. The photo-diode alley is preferably arranged perpendicularly to the direction of the stream and also perpendicularly to the optical axis. In practice, signals from elements in the photo-detector alley are multiplied in differential amplifiers to improve the SN ratio of the photo-detector (14) in such a manner that an electric signal of zero is produced when the elements in the photo-detector alley are irradiated uniformly or no particle passes through the cell (13), while suitable electric signal which represents characteristics (number, size etc) of the particles is produced when any change in intensity caused by the diffraction image of a converged light is appeared in the elements in the photo-detector alley. Details are described in JP-A-5-215664.

The principle of the sub-micron particles monitor is completely different from the conventional particle counters based on light scattering. Namely, in the conventional light scattering type particle counter, dispersed particles are irradiated with an illumination parallel ray and each particle is count from the resulting light intensity. On the contrary, the principle of the sub-micron particles monitor reside in that a focussed light is directed to a liquid to be tested, shadow of light (diffraction image) is detected by simple photo-detector in a function of change in light intensity, and the sum of projected area of particles is determined by using a calibration curve.

Now, the present invention will be explained by Examples. Examples.

### Example 1

### Effect in separation of bubble produced by depression

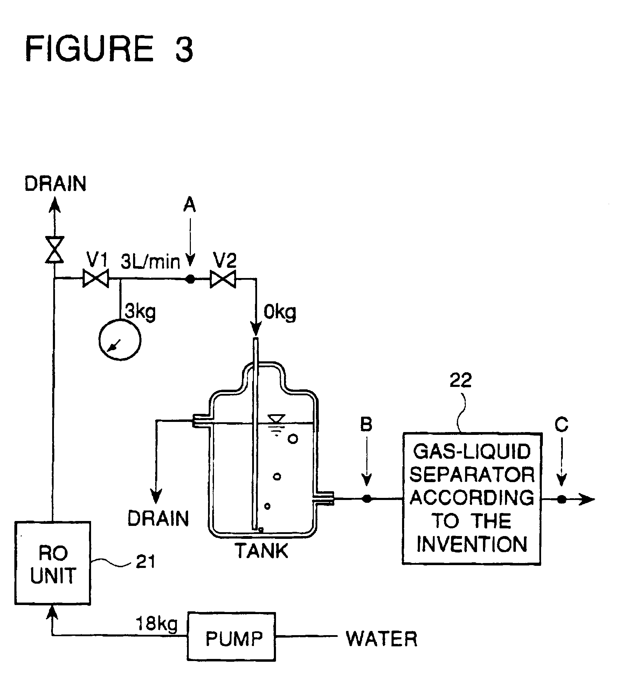

Performance of the gas-liquid separator according to the present invention was evaluated in a test system shown in Fig. 3.

In this test, city water was pumped through a reverse osmosis membrane unit 21 (RO unit) to produce pure water. This pure water was decompressed (from 3 kg to 0 kg) so that gas bubbles were created in a tank. The resulting bubble containing water was passed through a gas-liquid separator (22) according to the present invention. Helicoidal tube used had an inner diameter of 4 mm and a length of 5 m.

Degree of cleanness of water was measured or detected at three points (A, B, C) shown in Fig. 3 by means of a sub-micron particles monitor "MILPA" (applicant's trademark) disclosed in applicant's JP-A-5-215664.

The degree of cleanness is evaluated by "PV value" which is unique index used in the "MILPA" and which represents the sum of projected area of particles (in this case, bubbles) in water. In other words, the "PV value" corresponds to the degree of cleanness and high PV value means low cleanness. The results are summarized in Table 1.

**Table 1**

| detection points | degree of cleanness (PV value) |
|---|---|
| A | 41.4 |
| B | 16,570 |
| C | 44.7 |

### Example 2

### Effect of orientation of helical tube

A clean tube having an inner diameter of 2 mm and a length of 30 cm was wound spirally about three turns to form a bundle of tube having a diameter about 3 cm.

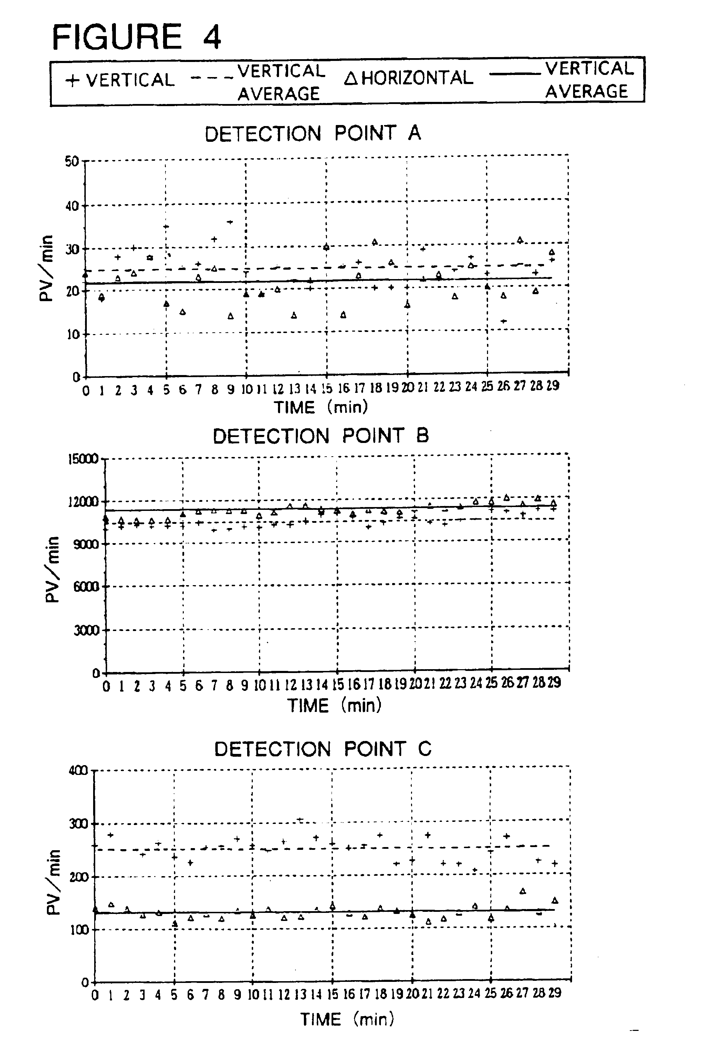

In this test, the effect of orientation of helical tube bundle was determined by the same apparatus shown in Fig. 3. The results are summarized in Fig. 4 which show development in time of the degree of cleanness ("PV value") detected at three different points (A, B, C). In Fig. 4, each (+) is a value : PV/min obtained when the helicoidal tube bundle was arranged in vertical arrangement and (Δ) is that obtained when the hclicoidal tube bundle was arranged in horizontal arrangement. Dotted line represents an average of (+) while a solid line represents an average of (Δ).

The results of Fig. 4 reveal such a fact that there is not substantial difference in the PV value between horizontal arrangement and vertical arrangement before the gas-liquid separator (22) (namely, positions A and B), but the PV values of horizontal arrangement are lower than those obtained in vertical arrangement after the gas-liquid separator (22) (namely, position C). This means that the separation efficiency is higher in horizontal arrangement. Table 2 shows the results of Fig. 4.

**Table 2**

| detection points | average of PV values | |
|---|---|---|
| | vertical arrangement | horizontal arrangement |
| A | 25 | 22 |
| B | 10,500 | 11,400 |
| C | 260 | 135 |

### Example 3

### Effect in separation of bubbles produced by dropping water

Pure water was extracted by a pump from the bottom of a tank and was droppcd onto a surface of water stored in the same tank to produce fine air bubbles in water.

The resulting water containing fine air bubbles was passed through the gas-liquid separator according to the present invention in which helicoidal tube having inner diameter of 4 mm was used and then fed to the particles monitor : "MILPA" to determine the cleanness (PV2 values). For comparison, the same water containing fine air bubbles was directly fed to the particles monitor "MILPA without passing through the gas-liquid separator according to the present invention to determine the cleanness (PV1 values).

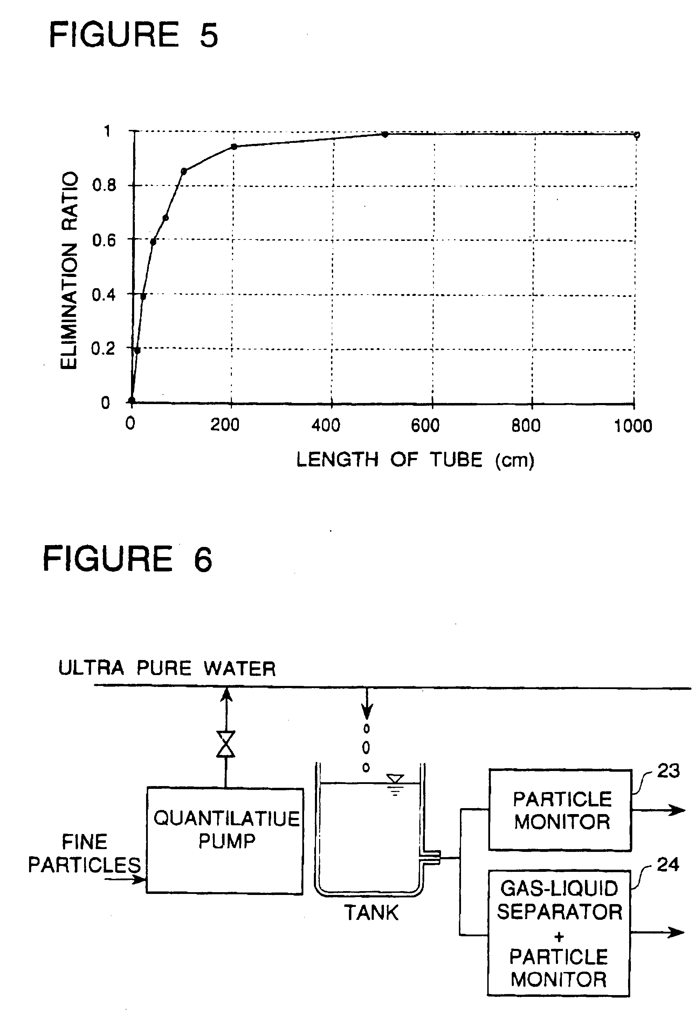

Length of the helicoidal tube was changed to determine the gas separation efficiency calculated by (1-PV2/PV1). Fig. 5 showing the results reveals that the minimum length is about 1 m and no merit can be obtained if the length exceeds 5 m and that about 2 m is sufficient in usual cases.

### Example 4

### Combination with the sub-micron particles monitor

In this test, as is shown in Fig. 6, fine solid particles together with fine air bubbles dispersed in pure water were detected by the particles monitor: "MILPA combined with or without the gas-liquid separator according to the present invention under following condition and method:

### Condition

### Gas-liquid separator according to the present invention

| | | |
|---|---|---|
| 1. | Helicoidal tube (1): | horizontal arrangement |
| | inner diameter = 4mm, | length = about 500 cm |
| | number of turn = about 20, | material = silicon rubber |
| 2. | Degassing chamber (2) | |
| | outer diameter = 2 cm | height = 3 cm |

### Sub-micron particles monitor "MILPA

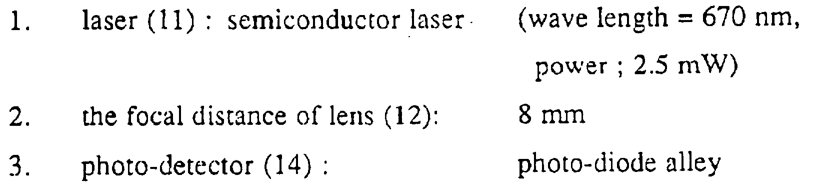

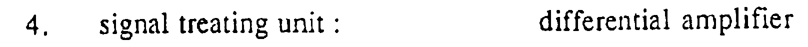

### Liquid tested

| | |
|---|---|
| Pure water: | |
| flow rate: | 66mm/sec |
| particles size of solid particle add: | 0.352 µm |

### Method

Pure water was dropped onto a surface of water in a tank for 20 minutes to produce air bubbles therein. Then, fine solid particles (particle size of 0.352 µm) were fed continuously into pure water line by a pump.

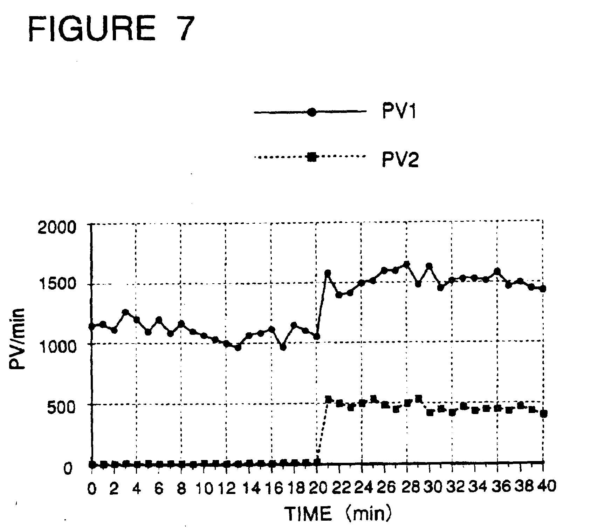

The resulting pure water containing fine solid particles and air bubbles was monitored by the sub-micron particles monitor "MILPA combined with or without the gas-liquid separator according to the present invention (23, 24). Results are shown in Fig. 7.

From the results, it was confirmed that solid particles alone in pure water containing air bubbles can be detected by the sub-micron particles monitor "MILPA combined with or without the gas-liquid separator according to the present invention.

## Claims

1. Gas-liquid separator comprising a helicoidal tube (1) having an inlet (5) for liquid containing fine bubbles, means for feeding said liquid to said inlet (5), a degassing chamber (2) communicated with an outlet (6) of of said tube, means (3) for removing separated gas out of said degassing chamber (2), and means for removing degassed liquid out of said degassing chamber (2), said helicoidal tube (1) having such a length that the fine bubbles in said liquid are coalesced and the resulting coalescent bubbles are separated from said liquid in said degassing chamber (2).

2. The gas-liquid separator set forth in claim 1 wherein the central axis of helicoid of said helicoidal tube (1) is arranged vertically.

3. The gas-liquid separator set forth in claim 1 or 2 wherein said helicoidal tube (I) surrounds said degassing chamber (2).

4. The gas-liquid separator set forth in any one of claims 1 to 3 wherein said helicoidal tube (1) has a length of more than 40 cm when an inner diameter of said helicoidal tube (1) is 1.5 to 6 mm.

5. A monitor for detecting sub-micron particles in fluid comprising a coherent light source (11), an optical system (12) for converging a light beam emitted from said coherent light source to produce a converged light, a cell (13) through which a stream of fluid containing fine particles is flown and being located in the neighborhood of a focus of said converged light beam, a photo-detector (14) which is positioned at an opposite side of said coherent light source with respect to said stream and substantially on an optical axis of said light beam to produce electrical signals, and an electric circuit (15) for counting numbers of particles in said stream by treating said electrical signals,
characterized in that the gas-liquid separator set forth in any one of claims 1 to 4 is arranged before said monitor.

6. The monitor set forth in claim 5 wherein said coherent light source (11) is a semiconductor laser and said photo-detector (14) comprises a photo diode alley.

7. The monitor set forth in claim 5 or 6 wherein said photo-detector comprises a photo-diode alley (14) arranged perpendicularly to the direction of said stream and also perpendicularly to said optical axis and said electric circuit (15) includes differential amplifiers for multiplying signals from elements in said photo-diode alley.
